# EUROPÄISCHE PATENTANMELDUNG

(11) **EP 1 291 674 A2**
(43) Veröffentlichungstag der Anmeldung: **12.03.2003**
(21) Anmeldenummer: 02019190.4
(22) Anmeldetag: 02.09.2002
(51) Int. Cl.: G01S 17/89, G01S 17/66

(54) **Verfahren zur Erkennung und Verfolgung von Objekten**

(30) Priorität: 28.09.2001 DE 10148063; 03.09.2001 DE 10143059
(71) Anmelder: IBEO Automobile Sensor GmbH, 22179 Hamburg (DE)
(72) Erfinder: Lages, Ulrich, Dr., 21031 Hamburg (DE); Dietmayer, Klaus, 89075 Ulm (DE); Streller, Daniel, 89231 Neu-Ulm (DE); Sparbert, Jan, 89160 Dornstadt (DE)
(74) Vertreter: Manitz, Finsterwald & Partner GbR

(57) **Zusammenfassung**

Bei einem Verfahren zur Erkennung und Verfolgung von Objekten auf der Basis von von einem Sensor, insbesondere einem Laserscanner, erfaßten, bevorzugt geschwindigkeits- oder tiefenaufgelösten, Bildpunkte enthaltenden Bildern von Gegenständen in einem Sichtbereich des Sensors, bei dem die Erkennung und Verfolgung unter Verwendung von den Objekten zugeordneten Modellen für die zeitliche Entwicklung von Zustandsvariablen erfolgt, die jeweils einen zeitlich veränderlichen Zustand des Objekts beschreiben und Zustandsvariablen zur Bestimmung wenigstens einer sensorspezifischen Eigenschaft des jeweiligen Objekts umfassen, aus den Bildpunkten des aktuellen Bildes Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen, eine Zuordnung von Segmenten eines aktuellen Bildes zu Objekten erfolgt, und abhängig von der Lage der Bildpunkte in den Segmenten und von dem Modell Schätzwerte der Zustandsvariablen zur Bestimmung der Position der jeweiligen Objekte ermittelt werden, werden aus verfügbaren Segmenten hypothetische Objekte gebildet, denen eine Wahrscheinlichkeit für die Existenz eines dem hypothetischen Objekt entsprechenden Gegenstands zugeordnet wird und für die in wenigstens einer folgenden Iteration des Verfahrens eine Erkennung und Verfolgung sowie eine Aktualisierung der Wahrscheinlichkeit durchgeführt wird.

## Beschreibung

Die vorliegende Erfindung betrifft ein Verfahren zur Erkennung und Verfolgung von Objekten auf der Basis von von einem Sensor, insbesondere einem Laserscanner, erfaßten, bevorzugt geschwindigkeits- oder tiefenaufgelösten, Bildpunkte enthaltenden Bildern von Gegenständen in einem Sichtbereich des Sensors, bei dem die Erkennung und Verfolgung unter Verwendung von den Objekten zugeordneten Modellen für die zeitliche Entwicklung von Zustandsvariablen erfolgt, die jeweils einen zeitlich veränderlichen Zustand des Objekts beschreiben und Zustandsvariablen zur Bestimmung der Position des jeweiligen Objekts umfassen, bei dem aus den Bildpunkten des aktuellen Bildes Segmente gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen, bei dem eine Zuordnung von Segmenten eines aktuellen Bildes zu Objekten erfolgt, und bei dem abhängig von der Lage der Bildpunkte in den Segmenten und von dem Modell Schätzwerte der Zustandsvariablen zur Bestimmung der Position der jeweiligen Objekte ermittelt werden.

Verfahren der obengenannten Art sind grundsätzlich bekannt. Sie können unter anderem dazu verwendet werden, den in Fahrtrichtung vor einem Fahrzeug liegenden Bereich zu überwachen. Dabei sollen insbesondere die Bewegungen von Gegenständen vor dem Fahrzeug erfaßt werden, um gegebenenfalls geeignete Reaktionen einleiten zu können.

Da Gegenstände bei einem solchen Verfahren in einem Bild nicht unbedingt durch ein Segment dargestellt werden, wenn sie zum ersten Mal in einem Bild auftreten, kann es schwierig sein, ein Objekt bei seinem ersten Auftreten korrekt zu identifizieren. Insbesondere kann es schwierig sein, mehrere Segmente zu einem Objekt zusammenzufassen, wenn gleichzeitig die Möglichkeit besteht, daß diese Segmente auch mehreren neuen Objekten zugeordnet werden könnten. Eine unzutreffende Generierung neuer Objekte kann jedoch in folgenden Verfahrensschritten zu wesentlichen Komplikationen führen, da entweder Objekte "zerfallen" oder zu einem neuen Objekt zusammengefaßt werden müssen. Solche Fehlinterpretationen können insbesondere bei der Überwachung von Verkehr vor einem Fahrzeug zu Fehlern führen, die die Funktionsfähigkeit eines mit dem Verfahren arbeitenden Systems deutlich beeinträchtigen können.

Es ist Aufgabe der vorliegenden Erfindung, ein gattungsgemäßes Verfahren anzugeben, bei dem die Gefahr von Fehlinterpretationen von Bildern minimiert ist.

Die Aufgabe wird gelöst durch ein gattungsgemäßes Verfahren mit den Merkmalen des kennzeichnenden Teils des Anspruchs 1.

Das erfindungsgemäße Verfahren ist dadurch gekennzeichnet, daß aus verfügbaren Segmenten hypothetische Objekte gebildet werden, denen eine Wahrscheinlichkeit für die Existenz eines dem hypothetischen Objekt entsprechenden Gegenstands zugeordnet wird und für die in wenigstens einer folgenden Iteration des Verfahrens eine Erkennung und Verfolgung sowie eine Aktualisierung der Wahrscheinlichkeit durchgeführt wird.

Unter einem geschwindigkeits- oder tiefenaufgelösten Bild eines Sensors für elektromagnetische Strahlung wird eine Menge von bei einer Abtastung des Sichtbereichs des Sensors erfaßten Bildpunkten verstanden, denen Punkte bzw. je nach Auflösung des Sensors auch Bereiche eines von dem Sensor erfaßten Gegenstands entsprechen, wobei die Bildpunkte der Lage der zugehörigen Gegenstandspunkte entsprechende Koordinaten in wenigstens zwei Dimensionen umfassen, die nicht beide senkrecht zur Blickrichtung des Sensors stehen.

Bei dem gattungsgemäßen Verfahren werden Bilder eines Sensors benutzt. Hierbei kann es sich um zweidimensionale Bilder eines Videosensors handeln.

Es werden jedoch bevorzugt geschwindigkeits- oder tiefenaufgelöste Bilder eines Sensors verwendet. Unter einem geschwindigkeits- bzw. tiefenaufgelösten Bild eines Sensors wird in dieser Anmeldung eine Menge von bei einer Abtastung des Sichtbereichs des Sensors erfaßten Bildpunkten verstanden, denen Punkte bzw. je nach Auflösung des Sensors auch Bereiche eines von dem Sensor erfaßten Gegenstands entsprechen, wobei den Bildpunkten der Geschwindigkeit bzw. der Lage der zugehörigen Gegenstandspunkte entsprechende Koordinaten in mindestens zwei Dimensionen zugeordnet sind, die nicht beide senkrecht zur Blickrichtung des Sensors stehen. Die Bildpunkte können weiterhin Daten über weitere, insbesondere optische, Eigenschaften der Gegenstandspunkte, beispielsweise deren Reflektivität, enthalten. Diese Daten werden im folgenden als optische Eigenschaften der Bildpunkte bezeichnet.

Sensoren zur Erfassung solcher geschwindigkeits- oder tiefenaufgelöster Bilder sind grundsätzlich bekannt.

Hierbei kann es sich beispielsweise um Ultraschallsensoren handeln.

Vorzugsweise werden Sensoren für elektromagnetische Strahlung verwendet.

Hierbei kann es sich beispielsweise um Radarsensoren handeln. Vorzugsweise werden bei diesen Geschwindigkeiten der Gegenstandspunkte verfolgt.

Besonders bevorzugt kann es sich bei den Sensoren für elektromagnetische Strahlung um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Rohdaten in tiefenaufgelöste Bilder aufweisen.

Vorzugsweise werden jedoch Laserscanner verwendet, die bei einer Abtastung einen Sichtbereich mit mindestens einem gepulsten Strahlungsbündel abtasten, das einen vorgegebenen Winkelbereich überstreicht und von einem Punkt bzw. Bereich eines Gegenstands, meist diffus, reflektierte Strahlungspulse des Strahlungsbündels detektieren. Dabei wird zur Entfernungsmessung die Laufzeit der ausgesandten, reflektierten und detektierten Strahlungspulse erfaßt. Die so erfaßten Rohdaten für einen Bildpunkt können dann als Koordinaten den Winkel, bei dem der Reflex erfaßt wurde, und die aus der Laufzeit der Strahlungspulse bestimmte Entfernung des Gegenstandspunkts enthalten. Bei der Strahlung kann es sich insbesondere um sichtbares oder infrarotes Licht handeln.

Unter Zustandsvariablen werden Variablen verstanden, die jeweils einen zeitlich veränderlichen Zustand des Objekts beschreiben, der wenigstens näherungsweise einem ebenso zeitlich veränderlichen Zustand des Gegenstands entspricht, der durch das Objekt dargestellt wird. Bei den sensorspezifischen Zustandsvariablen kann es sich insbesondere um solche handeln, die dem Typ der von dem Sensor erfaßten Meßdaten entsprechen. Bei Sensoren, die geschwindigkeitsaufgelöste Bilder erfassen, können insbesondere entsprechende, die Geschwindigkeit eines Gegenstands bzw. des dieses darstellenden Objekts beschreibende Zustandsvariablen, bei tiefenaufgelösten Bildern die Position eines Gegenstands bzw. des dieses darstellenden Objekts verwendet werden.

Die Erkennung und Verfolgung von Objekten erfolgt dabei auf der Basis von Modellen, mit denen die zeitliche Entwicklung der Zustandsvariablen wenigstens näherungsweise beschreibbar ist, wobei sich Art und Komplexität der Modelle u.a. nach dem Objekterkennungs- und -verfolgungsverfahren sowie der Art der typischerweise auftretenden, zu verfolgenden Gegenstände richten kann.

Aus den Bildpunkten eines aktuellen Bildes werden Segmente gebildet, die jeweils einen einzelnen Bildpunkt oder eine Menge aller Bildpunkte umfassen, von denen jeweils mindestens zwei entsprechend wenigstens einem Kriterium für einen maximal zulässigen Abstand als dem Segment zugehörig definiert werden, und die untereinander keine gemeinsamen Bildpunkte aufweisen. Bei dem bzw. den Kriterien für den Abstand kann es sich insbesondere um den euklidischen Abstand der Objektpositionen handeln, der für eine Segmentzugehörigkeit einen vorgegebenen Maximalwert nicht überschreiten darf, oder um die Beträge der Differenzen der Koordinaten der Positionen in einem vorgegebenen Koordinatensystem, beispielsweise einem kartesischen Koordinatensystem oder einem Polarkoordinatensystem, wobei eine Segmentzugehörigkeit erkannt wird, wenn die Beträge in beiden Richtungen des Koordinatensystems jeweils gegebenenfalls unterschiedliche Maximalwerte unterschreiten.

Es erfolgt dann eine Zuordnung von Segmenten eines aktuellen Bildes zu Objekten. Danach werden abhängig von der Lage der Bildpunkte in den Segmenten und dem Modell Schätzwerte der Zustandsvariablen zur Bestimmung der Position der jeweiligen Objekte ermittelt.

Erfindungsgemäß werden aus verfügbaren Segmenten hypothetische Objekte gebildet, denen eine Wahrscheinlichkeit für die Existenz eines dem hypothetischen Objekt entsprechenden Gegenstands zugeordnet wird und für die in wenigstens einer folgenden Iteration des Verfahrens eine Erkennung und Verfolgung sowie eine Aktualisierung der Wahrscheinlichkeit durchgeführt wird.

Bei dem erfindungsgemäßen Verfahren ist es demnach möglich, zunächst nur Vermutungen über mögliche neue Objekte anzustellen und diese dann zunächst weiterzuverfolgen. Hierdurch kann es vermieden werden, sich bei der Bildung neuer Objekte auf die Zuordnung eines Segments oder einer Segmentkombination zu einem Objekt festlegen zu müssen, obwohl hierfür gegebenenfalls nicht genügend Informationen vorhanden sind. Insbesondere können alle denkbaren Kombinationen von Segmenten daraufhin überprüft werden, ob sie einem Objekt zugeordnet werden können. Durch geeignete Wahl der hypothetischen Objekte kann sichergestellt werden, daß bei der Objektbildung keine möglichen Segmentkombinationen vergessen werden und eines der hypothetischen Objekte dem tatsächlich existierenden Gegenstand entspricht.

Erfindungsgemäß kann die Verwendung von hypothetischen Objekten auch bei der Erkennung von schon vorhandenen Objekten entsprechend verwendet werden. Dazu werden bei mehreren möglichen Segment-Objekt-Zuordnungen entsprechende Hypothesen bzw. hypothetische Objekte gebildet.

Die hypothetischen Objekte werden im weiteren Verfahren parallel weiterbehandelt. Für sie erfolgt im weiteren Verfahren, d. h. in wenigstens einer folgenden Iteration des Verfahrens, eine Erkennung und Verfolgung sowie eine Aktualisierung der Wahrscheinlichkeit. Hierdurch ist es möglich, aus den anfänglich gebildeten Hypothesen, von denen sich in der Regel die meisten als nicht haltbar erweisen werden, die wahrscheinlichsten auszuwählen und bei einer Ausgabe von Objektdaten zu berücksichtigen.

Grundsätzlich können bei dem Verfahren große Anzahlen von hypothetischen Objekten auftreten, deren Wahrscheinlichkeit jeweils im weiteren Verlauf des Verfahrens - meist rasch - sehr kleine Werte annimmt, das heißt, die so unwahrscheinlich werden, daß sie bei einer weiteren Objekterkennung und -verfolgung außer Betracht bleiben können. Es ist daher bevorzugt, daß hypothetische Objekte verworfen werden, wenn deren Wahrscheinlichkeit eine erste Mindestwahrscheinlichkeit unterschreitet.

Werden hypothetische Objekte verworfen, so werden dann besonders bevorzugt die Wahrscheinlichkeiten entsprechender anderer hypothetischer Objekte entsprechend erhöht. Hierdurch kann also erreicht werden, daß nur vergleichsweise wenige hypothetische Objekte über mehrere Iterationen weiterverfolgt werden müssen, wodurch die Durchführung des erfindungsgemäßen Verfahrens wesentlich beschleunigt wird. Die Wahl für den Wert der ersten Mindestwahrscheinlichkeit kann insbesondere in Abhängigkeit davon erfolgen, wieviel Zeit zur Verarbeitung der hypothetischen Objekte zur Verfügung steht. Bei zeitkritischen Anwendungen kann es dabei notwendig sein, einen größeren Wert zu wählen. Der Wert für die erste Mindestwahrscheinlichkeit kann beispielsweise bei 10 Prozent liegen.

Weiterhin ist es bevorzugt, daß hypothetische Objekte als eindeutig erkannte Objekte behandelt werden, wenn deren Wahrscheinlichkeit eine zweite Mindestwahrscheinlichkeit überschreitet. Dies bedeutet mit anderen Worten, daß für solche Objekte keine Alternativen bestehen, sondern davon ausgegangen werden kann, daß dem hypothetischen Objekt tatsächlich ein Gegenstand entspricht. Für die Wahl des Wertes der zweiten Mindestwahrscheinlichkeit gelten grundsätzlich die gleichen Überlegungen wie für die Wahl des Wertes der erste Mindestwahrscheinlichkeit. Der Wert für die zweite Mindestwahrscheinlichkeit kann beispielsweise bei 90 Prozent liegen. Unter der Behandlung als eindeutig erkanntes Objekt wird hierbei verstanden, daß für das Objekt keine Aktualisierung der Wahrscheinlichkeit mehr stattfinden muß, da diese zu 100 Prozent angenommen wird. Insbesondere kann bei dem erfindungsgemäßen Verfahren hierzu eine Unterscheidung in hypothetische Objekte und eindeutig erkannte Objekte erfolgen, so daß die Behandlung als eindeutig erkanntes Objekt bedeutet, daß eine Umwandlung eines hypothetischen Objekts in ein eindeutig erkanntes Objekt erfolgt. In dieser Anmeldung werden Objekte, die als eindeutig erkannte Objekte behandelt werden, als eindeutig erkannte Objekte bezeichnet.

Hypothetische Objekte mit Wahrscheinlichkeiten, die zwischen der ersten und der zweite Mindestwahrscheinlichkeit liegen, werden weiterhin als hypothetische Objekte behandelt, für die in jedem Fall eine Aktualisierung der Wahrscheinlichkeiten in jeder weiteren Iteration durchgeführt wird.

Grundsätzlich können hypothetische Objekte für alle in einem aktuellen Bild verfügbaren Segmente gebildet werden. Dies hat jedoch zur Folge, daß gegebenenfalls eine sehr hohe Zahl hypothetischer Objekte entsteht, deren Erkennung und Verfolgung einen hohen Verarbeitungsaufwand erfordert. Es ist daher bevorzugt, daß die verfügbaren Segmente nur diejenigen Segmente eines Bildes sind, die keinen eindeutig erkannten Objekten zugeordnet werden können. Hierdurch wird insbesondere bei der Verfolgung von Szenen, in denen Objekte bzw. die durch sie dargestellten Gegenstände über längere Zeit vorhanden sind, eine deutliche Reduktion der für die Durchführung einer Iteration des erfindungsgemäßen Verfahrens benötigten Zeit erzielt.

Grundsätzlich können in den erfaßten, vorzugsweise geschwindigkeitsoder tiefenaufgelösten Bildern mehrere, demselben Gegenstand entsprechende Segmente auftreten.

Es ist daher als eine erste Alternative bevorzugt, daß für Segmentteilmengen in der Menge aller verfügbaren Segmente jeweils mindestens eine Objekthypothese gebildet wird, die wenigstens ein hypothetisches Objekt umfaßt, und daß der Objekthypothese eine Hypothesenwahrscheinlichkeit zugewiesen wird, wobei die Hypothesenwahrscheinlichkeiten bei wenigstens einem folgenden Iterationsschritt aktualisiert werden und die Summe der Hypothesenwahrscheinlichkeiten der Objekthypothesen für eine Segmentteilmenge Eins ist. Hierdurch ist es möglich, kontrolliert hypothetischen Objekten Wahrscheinlichkeiten zuzuweisen. Darüber hinaus kann eine Objekthypothese für eine Segmentteilmenge mehrere Objekte umfassen, während eine andere Objekthypothese für die gleiche Segmentteilmenge nur ein Objekt umfaßt, das alle Segmente der Segmentteilmenge umfaßt. Vorzugsweise wird hierbei die Hypothesenwahrscheinlichkeit den hypothetischen Objekten der betreffenden Objekthypothese als Wahrscheinlichkeit zugeordnet. Bei der Aktualisierung der Wahrscheinlichkeiten für hypothetische Objekte ist dabei darauf zu achten, daß die Summe der Hypothesenwahrscheinlichkeiten stets Eins bleibt.

Als zweite Alternative ist in einer anderen bevorzugten Weiterbildung vorgesehen, daß für Segmentteilmengen in der Menge aller verfügbaren Segmente jeweils mindestens eine Objekthypothese gebildet wird, die genau ein hypothetisches Objekt umfaßt, und daß der Objekthypothese eine Hypothesenwahrscheinlichkeit zugewiesen wird, die bei wenigstens einem folgenden Iterationsschritt aktualisiert wird. Im Unterschied zu der oben geschilderten Weiterbildung bei der Hypothesenwahrscheinlichkeiten von Objekthypothesen, die aus einer Segmentteilmenge hervorgegangen sind, nur gemeinsam unter Erhaltung der Normierung geändert werden können, können hier die Hypothesenwahrscheinlichkeiten unabhängig voneinander geändert werden. Insbesondere können diese stark von Meßwerten für Objekteigenschaften abhängen. Durch die Bildung von Objekthypothesen mit nur einem Objekt kann dieses sehr einfach weiterverfolgt werden. Darüber hinaus ist, wie gerade ausgeführt, die Aktualisierung von Wahrscheinlichkeiten einfacher durchzuführen.

Bei beiden Alternativen werden bevorzugt für jede betrachtete Segmentteilmenge alle möglichen Objekthypothesen gebildet, so daß sich unter den Objekthypothesen wenigstens eine findet, die dem realen Gegenstand bzw. den realen Gegenständen entspricht.

Grundsätzlich können bei beiden Alternativen alle Segmentteilmengen in der Menge aller verfügbaren Segmente zur Bildung von Objekthypothesen verwendet werden. Dies führt jedoch zu einer sehr großen Anzahl von Objekthypothesen mit einer noch größeren Anzahl von hypothetischen Objekten, die die für die Ausführung des erfindungsgemäßen Verfahrens erforderliche Zeit sehr stark erhöhen. Es ist daher bevorzugt, daß für jede Segmentteilmenge in der Menge aller verfügbaren Segmente, die wenigstens einem vorgegebenen Hypothesenbildungskriterium entspricht, Objekthypothesen gebildet werden. Hierdurch wird die Anzahl der Objekthypothesen nochmals abhängig von der Wahl des Hypothesenbildungskriteriums unter Umständen deutlich reduziert.

Als Hypothesenbildungskriterium kann insbesondere vorgesehen werden, daß nur Segmentteilmengen mit vorgegebenen Anzahlen von Segmenten zur Objekthypothesenbildung herangezogen werden.

Besonders bevorzugt ist es, daß als Hypothesenbildungskriterium verwendet wird, daß jeweils mindestens zwei Segmente der Segmentteilmenge einen Abstand voneinander aufweisen, der einen vorgegebenen Mindestabstand unterschreitet. Als Abstand der Segmente kann hierbei der Abstand von Bezugspunkten der Segmente, beispielsweise der Schwerpunkte, vorgesehen sein. Es ist jedoch auch möglich, als Abstand den minimalen Abstand anzusehen, der zwischen je einem der Bildpunkte des einen Segments und je einem der Bildpunkte des anderen Segments auftritt.

Bei dieser Weiterbildung wird ausgenutzt, daß Unsicherheiten in der Zuordnung von Segmenten zu Objekten nur für solche Segmente bestehen, die überhaupt zu einem Objekts zusammenfaßbar sind. Bei Anwendungen, bei denen die Ausdehnungen von zu erkennenden und zu verfolgenden Gegenständen kleiner als der Sichtbereich des Sensors sind, sind daher die Mehrdeutigkeiten in einem ersten Bereich unabhängig von denen in einem zweiten, weit von dem ersten Bereich entfernten Bereich. Der vorgegebene Mindestabstand kann dabei insbesondere in Abhängigkeit von der größten Ausdehnung eines in dem Sichtbereich des Sensors zu erwartenden Gegenstands gewählt werden, insbesondere kann der Mindestabstand durch die größte Ausdehnung eines solchen Gegenstands gegeben sein.

Um die Anzahl der Objekthypothesen möglichst klein zu halten, ist es weiterhin bevorzugt, daß Objekthypothesen verworfen werden, wenn deren Hypothesenwahrscheinlichkeit eine dritte Mindestwahrscheinlichkeit unterschreitet oder eines ihrer hypothetischen Objekte verworfen wird. Bei der Weiterbildung nach der ersten Alternative werden dann die Hypothesenwahrscheinlichkeiten entsprechender, bei der Bildung für die gleiche Segmentteilmenge gebildeter Objekthypothesen vorzugsweise dementsprechend erhöht.

Aus dem gleichen Grund ist es weiterhin bevorzugt, daß die hypothetischen Objekte einer Objekthypothese als eindeutig erkannte Objekte behandelt, die Objekthypothese gestrichen wird, wenn die Wahrscheinlichkeit der Objekthypothese eine vierte Mindestwahrscheinlichkeit überschreitet.

Bei dem Verfahren nach der ersten Alternative ist es dabei bevorzugt, daß alle anderen Objekthypothesen, die aus derselben Segmentteilmenge wie die gestrichene gebildet wurden, verworfen werden. Damit wird die Konsistenz der Hypothesenwahrscheinlichkeiten erhalten.

In beiden Fällen gelten in bezug auf die Wahl der Mindestwahrscheinlichkeiten für die Hypothesenwahrscheinlichkeiten die gleichen Überlegungen wie für die der hypothetischen Objekte.

Grundsätzlich können die Wahrscheinlichkeiten bzw. Hypothesenwahrscheinlichkeiten sowohl bei der Bildung als auch bei der Aktualisierung mit unterschiedlichen Methoden bestimmt werden.

Liegen keine weiteren Informationen vor, so können insbesondere bei der Bildung einer Objekthypothese die Hypothesenwahrscheinlichkeiten von Objekthypothesen für eine Segmentteilmenge als gleich hoch angenommen werden.

Weiterhin ist es bevorzugt, daß bei der Bildung eines hypothetischen Objekts die Hypothese Annahmen über den Zustand des hypothetischen Objekts umfaßt. Hierbei kann es sich insbesondere um eine bevorzugte Bewegungsrichtung handeln.

Auch ist es bevorzugt, daß die Hypothesenwahrscheinlichkeiten, insbesondere bei deren Aktualisierung, durch Heuristiken bestimmt werden. Bei diesen Heuristiken werden beispielsweise Erfahrungswerte in bezug auf die zu verfolgenden Gegenstände verwendet, um die Wahrscheinlichkeit von hypothetischen Objekten abzuschätzen.

Besonders bevorzugt können hierbei Konsistenzkriterien verwendet werden, deren Verletzung einen Ausschluß der Hypothese zur Folge haben sollte. Es ist daher bevorzugt, daß in dem Fall, daß wenigstens ein hypothetisches Objekt einer Objekthypothese wenigstens ein vorgegebenes Konsistenzkriterium nicht erfüllt, die Objekthypothese verworfen wird. Hierdurch kann eine drastische Reduktion von Objekthypothesen und damit eine erhebliche Beschleunigung des Verfahrens erreicht werden. Bei dem Verfahren nach der ersten Alternative ist dabei besonders bevorzugt, daß alle anderen Objekthypothesen, die ein mit dem hypothetischen Objekt, das das Konsistenzkriterium nicht erfüllt, übereinstimmendes hypothetisches Objekt aufweisen, verworfen werden.

Weiterhin können besonders bevorzugt auch Häufigkeitsverteilungen für die Eigenschaften von Gegenständen, die beispielsweise aus entsprechenden statistischen Daten über die tatsächlichen Gegenstände gewonnen werden können, verwendet werden, um die Wahrscheinlichkeit von hypothetischen Objekten bzw. von Hypothesenwahrscheinlichkeiten abzuschätzen. Bei den Eigenschaften von Gegenständen kann es sich dabei sowohl um geometrische als auch um dynamische, beispielsweise die Bewegung betreffende Eigenschaften sowie um optische Eigenschaften, insbesondere die Reflektivität, handeln.

Dazu ist es bevorzugt, daß zur Klassifizierung von Objekten mehrere Objektklassen vorgesehen werden, die wenigstens eine Eigenschaft von Objekten betreffen, die aus wenigstens einem der geschwindigkeits- oder tiefenaufgelösten Bilder bestimmbar ist, und daß allen Objekten als Eigenschaft eine der Objektklassen zugeordnet ist, wobei die Zuordnung von Objektklassen zu hypothetischen Objekten bei deren Bildung erfolgt und die Hypothese eine Annahme über die Zuordnung eine Objektklasse umfaßt. Damit werden mit der Hypothesenbildung nicht nur Annahmen über möglicherweise bei der Objektbildung zu einem Objekt zu kombinierende Segmente erfaßt, sondern es kann auch eine weitergehende Identifizierung der Objekte erfolgen.

Vorzugsweise kann die Objektklasse dadurch bestimmt sein, daß sie Gegenständen mit bestimmten geometrischen Eigenschaften, also insbesondere bestimmten Formen und Größen, entspricht. Dabei können die Formen nur sehr abstrahiert und damit einfach vorgegeben sein und die Größen innerhalb eines vorgegebenen Wertebereichs liegen. Bei einer Verwendung zur Überwachung eines Bereichs vor einem Fahrzeug kann eine solche Klassifizierung nach geometrischen Kriterien insbesondere auch eine entsprechende Zuordnung von objektklassenspezifischen Modellen erlauben. Dies ist in der deutschen Patentanmeldung mit dem anwaltlichen Aktenzeichen S7880 mit dem Titel Verfahren zur Erkennung und Verfolgung von Objekten ", die am gleichen Tag wie die vorliegende Anmeldung von der gleichen Anmelderin eingereicht wurde (deutsche Patentanmeldung mit dem Anmeldetag 28. September 2001 und dem amtlichen Aktenzeichen 101 48 071.7) und deren Inhalt hiermit durch Bezugnahme in die vorliegende Anmeldung aufgenommen wird, genauer beschrieben.

Insbesondere kann die Objektklasse mehrere Eigenschaften von Gegenständen, die durch Objekte der Objektklasse darstellbar sind, umfassen, die jedoch nicht alle aus nur einem Bild bestimmbar sein müssen.

Insbesondere kann eine Objektklasse dadurch bestimmt sein, daß ihr entsprechende Gegenstände bestimmte dynamische Eigenschaften aufweisen, die in objektklassenspezifischen Bereichen liegen. Hierbei kann es sich um Geschwindigkeiten, Beschleunigungen oder in dem Fall, daß Orientierungen der Objekte verwendet werden, auch Rotationsgeschwindigkeiten handeln. Insbesondere kann sich die Objektklasse durch die Vorgabe beispielsweise maximaler Geschwindigkeiten, Beschleunigungen oder Rotationsgeschwindigkeiten auszeichnen.

Während für die Zuordnung eine Objektklasse bei der Bildung hypothetische Objekte im allgemeinen eine Zuordnung allein über aus einem einzelnen Bild bestimmbare, vorzugsweise geometrische, Eigenschaften erfolgt, kann im weiteren Verlauf des Verfahrens anhand dieser Eigenschaften einfach überprüft werden, ob die Annahmen über die Zuordnung des Objekts zu der Objektklasse zutreffend waren oder nicht. Dazu ist es bevorzugt, daß das Konsistenzkriterium eine durch die Objektklasse erfaßte Eigenschaft betrifft. Insbesondere kann eine Abweichung einer für ein hypothetisches Objekt festgestellten Eigenschaft von einer in der Objektklasse gegebenen Eigenschaft bzw. eine Abweichung eines für ein hypothetisches Objekt festgestellten Verhaltens von einem in der Objektklasse vorgegebenen Verhalten verwendet werden. Als Abweichung wird hierbei insbesondere auch angesehen, daß ein festgestellter Wert für eine Eigenschaft nicht innerhalb eines entsprechenden, für die Klasse vorgegebenen Bereichs liegt. Dies kann insbesondere die Ausdehnung des Objekts, aber auch die dynamischen Eigenschaften bzw. das dynamische Verhalten betreffen.

Besonders bevorzugt ist es, daß eine Objektklasse eine Häufigkeitsverteilung für eine aus einem oder mehreren Bildern bestimmbare Eigenschaft der durch Objekte der Objektklasse dargestellten Gegenstände aufweist, in einem aktuellen Iterationsschritt für ein Objekt der Objektklasse die Eigenschaft bestimmt wird, und die Hypothesenwahrscheinlichkeit einer Objekthypothese, die das Objekt enthält, in Abhängigkeit von der bestimmten Eigenschaft und von der Häufigkeitsverteilung für die Eigenschaft bestimmt wird. Eine solche Häufigkeitsverteilung kann beispielsweise durch statistische Analysen von Eigenschaften realer Gegenstände gewonnen werden. So kann bei Personenkraftwagen beispielsweise aus dem Bestand an Personenkraftwagen aus Daten über Typ und Länge eine Häufigkeitsverteilung der Längen von Personenkraftwagen erstellt werden. Hierdurch ist ein vergleichsweise einfaches Kriterium zur Bestimmung von Hypothesenwahrscheinlichkeiten gegeben.

Ist als Objektklasse insbesondere eine Objektklasse mit Fahrzeugen, beispielsweise eine Objektklasse für Zweiräder, eine Objektklasse für Pkw oder eine Objektklasse für Lastkraftwagen sowie Busse vorgesehen, so kann bei der Bildung von Objekthypothesen bevorzugt eine mögliche Bewegungsrichtung der Objekte berücksichtigt werden.

Weiterhin ist es besonders bevorzugt, daß jedem Objekt eine Objektbox zugeordnet ist, die eine Ausdehnung des Objekts in der Bildebene darstellt, deren Form und Größe von der dem Objekt zugeordneten Objektklasse abhängt und die hinsichtlich Form und Größe dem durch das Objekt dargestellten Gegenstand entspricht, und daß ein Segment einem Objekt zugeordnet wird, wenn die Objektbox durch entsprechende Positionierung das Segment enthält. Durch die Verwendung von Objektboxen wird insbesondere die Zuordnung von Segmenten vereinfacht, da durch die Objektboxen objektklassenabhängig maximale Ausdehnungen von Objekten angebbar sind. Die Verwendung von Objektboxen ist in der deutschen Patentanmeldung mit dem anwaltlichen Aktenzeichen S7875 und dem Titel "Verfahren zur Erkennung und Verfolgung von Objekten", die am gleichen Tag wie die vorliegende Anmeldung von der gleichen Anmelderin eingereicht wurde (deutsche Patentanmeldung mit dem Anmeldetag 28. September 2001 und dem amtlichen Aktenzeichen 101 48 068.7) und deren Inhalt hiermit durch Bezugnahme in die vorliegende Anmeldung aufgenommen wird, beschrieben.

Besonders bevorzugt ist es dabei, daß in Abhängigkeit von der Lage der Bildpunkte in der Objektbox und/oder der Anzahl der Bildpunkte in der Objektbox eine Objektgüte bestimmt wird, und daß die Hypothesenwahrscheinlichkeit einer Hypothese oder Objekthypothese in Abhängigkeit von der Objektgüte des oder der hypothetischen Objekte bestimmt wird. Die Verwendung von Objektboxen ergibt nicht nur günstigere Resultate bei der Objektverfolgung, sondern erlaubt auch eine bessere Abschätzung der Wahrscheinlichkeit einer Objekthypothese, indem durch die Objektgüte ein Maß bereitgestellt wird, das angibt, wie sicher aus der Messung auf die Objektbox und damit auch auf die Objektklasse bzw. das Wiederauffinden eines Objekts geschlossen werden kann.

Die Objektgüte kann insbesondere dadurch bestimmt werden, daß die Anzahl der erfaßten Bildpunkte in der Objektbox zu von einer Referenzanzahl, beispielsweise der von dem Sensor maximal erfaßbaren Anzahl, der Bildpunkte in Beziehung gesetzt wird. Die maximal mögliche Anzahl von Bildpunkten kann dabei auf der Basis der Lage der Objektbox relativ zu dem Sensor und dem Auflösungsvermögen des Sensors bei der gegebenen Objektboxposition oder durch Variation über alle möglichen Lagen der Objektbox zu dem Sensor ermittelt werden. Es kann jedoch unabhängig von dem Verhältnis zusätzlich die maximal mögliche Anzahl von Bildpunkten in die Objektgüte eingehen.

Wenn zur Bestimmung der Objektgüte die Anzahl der Bildpunkte in der Objektbox verwendet wird, dann ist es besonders bevorzugt, daß vor der Bestimmung der Objektgüte überprüft wird, ob ein Teil des durch das hypothetische Objekt dargestellten Gegenstands durch einen anderen, zwischen dem Sensor und dem Gegenstand liegenden Gegenstand verdeckt wird, und daß bei der Bestimmung der Objektgüte die Anzahl der durch die Verdeckung ausgeblendeten Bildpunkte in der Objektbox berücksichtigt wird. Die Berücksichtigung kann insbesondere dadurch erfolgen, daß verdeckte Gegenstandspunkte rekonstruiert und als bei der Messung erfaßt angesehen werden.

Weiterhin ist es besonders bevorzugt, daß eine Objektgüte in Abhängigkeit von den minimalen Abständen zwischen in der Objektbox liegenden Bildpunkten und dem Rand der Objektbox und von der Anzahl der in der Objektbox liegenden Bildpunkte bestimmt wird, und daß die Hypothesenwahrscheinlichkeit einer Hypothese oder Objekthypothese in Abhängigkeit von der Objektgüte der hypothetischen Objekte bestimmt wird. Hierdurch kann sehr genau geprüft werden, wie gut die durch die Segmente dargestellte Kontur eines Objekts in einem aktuellen Bild mit derjenigen der Objektbox übereinstimmt. In die Objektgüte kann dabei vorzugsweise die Objektklasse eingehen, da beispielsweise bei Personenkraftwagen in der Regel in sehr guter Näherung eine Annäherung an eine Rechteckform gegeben ist, während beispielsweise bei Lastkraftwagen in der typischerweise von dem Sensor abgetasteten Höhe keine entsprechende Kontur in dem erfaßten Bild zu erwarten ist, so daß die Objektgüte bedingt durch die Objektklasse grundsätzlich geringer sein wird als bei Personenkraftwagen.

Vorzugsweise kann hierbei der mittlere einfache oder quadratische Abstand der Bildpunkte von dem Rand der Objektbox verwendet werden.

Weiterhin ist es besonders bevorzugt, daß der zur Zuordnung verwendete mittlere Abstand auf eine Ausdehnung der Objektbox, bei einem Rechteck beispielsweise die Länge oder Breite, bezogen wird. Hierdurch werden Unterschiede in der Größe der Objektboxen, beispielsweise für Personen oder Lastkraftwagen, berücksichtigt, so daß der Schwellwert für alle Objekte gleich gewählt werden kann.

Es ist darüber hinaus bevorzugt, daß mindestens eine Objektbox einen innerhalb der Objektbox entlang ihres Umfangs verlaufenden Randstreifen vorgegebener Breite aufweist, und eine Objektgüte in Abhängigkeit von der Anzahl der in dem Randstreifen liegenden Bildpunkte und der Gesamtzahl der in der in der Objektbox liegenden Bildpunkte bestimmt wird. Insbesondere kann hierzu das Verhältnis der beiden Werte verwendet werden. Auf diese Weise läßt sich sehr schnell eine Güte bestimmen, die angibt, wie genau die Bildpunkte, die der Kontur des Gegenstands entsprechen sollten, entlang der Kontur der Objektbox angeordnet sind.

Zur Bestimmung der Hypothesenwahrscheinlichkeiten können insbesondere auch wenigstens zwei verschiedene Objektgüten verwendet werden.

Weiterhin können die Hypothesenwahrscheinlichkeiten auch in Abhängigkeit von der Umgebung der Objekte der Objekthypothese, d. h. situativ, bestimmt werden. Diese Umgebung kann sich beispielsweise aus der Klassifizierung anderer, insbesondere als eindeutig erkannter Objekte und Heuristiken ergeben.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Unter einem Computer wird hierbei eine beliebige Datenverarbeitungsvorrichtung verstanden, mit der das Verfahren ausgeführt werden kann.

Insbesondere können diese digitale Signalprozessoren und/oder Mikroprozessoren aufweisen, mit denen das Verfahren ganz oder in Teilen ausgeführt wird.

Gegenstand der Erfindung ist auch ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Weiterer Gegenstand der Erfindung ist ein Verfahren zur Erkennung und Verfolgung von Gegenständen in einem Sichtbereich eines Sensors zur Erfassung elektromagnetischer Strahlung, insbesondere eines Laserscanners, bei dem mit dem Sensor zeitlich aufeinanderfolgend geschwindigkeits- oder tiefenaufgelöste Bilder wenigstens eines Teils seines Sichtbereichs erfaßt werden, und bei dem die erfaßten Bilder mit dem erfindungsgemäßen Verfahren zur Erkennung und Verfolgung von Objekten verarbeitet werden.

Schließlich ist Gegenstand der Erfindung eine Vorrichtung zur Erkennung und Verfolgung von Objekten mit mindestens einem zur Erfassung geschwindigkeits- oder tiefenaufgelöster Bilder eines Überwachungsbereichs ausgebildeten Sensor zur Erfassung elektromagnetischer Strahlung, insbesondere einem Laserscanner, und mit einer Datenverarbeitungseinrichtung, die zur Durchführung des erfindungsgemäßen Verfahrens ausgebildet ist.

Eine bevorzugte Ausführungsform der Erfindung wird im folgenden beispielhaft anhand der Zeichnungen erläutert. Es zeigen:
- Fig. 1: eine schematische Draufsicht auf eine Szene mit einem Fahrzeug, an dem ein Laserscanner angebracht ist, und zwei Fahrzeugen im Sichtbereich des Laserscanners,
- Fig. 2: die Szene in Fig. 1 zu einem späteren Zeitpunkt,
- Fig. 3: eine struktogrammähnliche Darstellung eines Verfahrens zur Erkennung und Verfolgung von Objekten nach einer bevorzugten Ausführungsform der Erfindung.

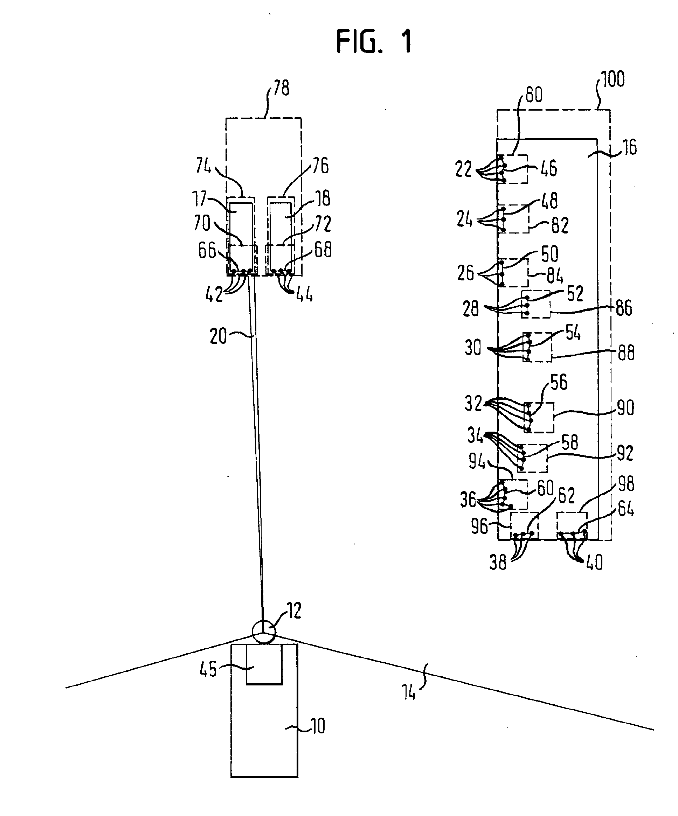

In Fig. 1 ist an der Frontseite eines Fahrzeugs 10 ein Laserscanner 12 angeordnet, dessen Sichtbereich 14 den in Fahrtrichtung vor dem Fahrzeug liegenden Bereich umfaßt. Im Sichtbereich 14 befinden sich ein Lastkraftwagen 16 und zwei Motorräder (Zweiräder) 17 und 18, die durch die Rechtecke mit durchgezogenen Linien dargestellt sind.

Der Laserscanner 12 tastet seinen Sichtbereich 14 mit einem umlaufenden, gepulsten Strahlungsbündel 20 ab und erfaßt die Position von Gegenstandspunkten, beispielsweise den Gegenstandspunkten 22, 24, 26, 28, 30, 32, 34, 36, 38 und 40 auf dem Lastkraftwagen 16 und den Gegenstandspunkten 42 und 44 auf den Motorrädern 17 und 18, an denen ein Puls des Strahlungsbündels 20 reflektiert wurde, anhand des Winkels, bei dem der Strahlungspuls ausgesandt bzw. empfangen wurde, und dem Abstand zum Laserscanner 12, der sich aus der Laufzeit des Strahlungspulses von der Abstrahlung bis zum Empfang nach der Reflexion ergibt.

Bei einer Abtastung des Sichtbereichs 14 wird somit ein geschwindigkeitsoder tiefenaufgelöstes Bild erfaßt, das die bei der Abtastung erfaßten Bildpunkte umfaßt, die zumindest die Koordinaten der Gegenstandspunkte 22 bis 44 enthalten, an denen das Strahlungsbündel 20 reflektiert wurde. Die Bildpunkte werden in den Figuren durch die Gegenstandspunkte dargestellt. Die Aktualisierung der vollständigen Bilder erfolgt in einem zeitlichen Abstand T.

Die von dem Laserscanner 12 erfaßten Bilder werden, gegebenenfalls nach einer Korrektur der Koordinaten der Bildpunkte, an eine Datenverarbeitungseinrichtung 45 in dem Fahrzeug 10 ausgegeben, in der eine Weiterverarbeitung der Bilder stattfindet. Die Datenverarbeitungseinrichtung 45 weist dazu, in den Figuren nicht gezeigt, einen Prozessor und einen Speicher sowie eine Schnittstelle zur Übertragung der Daten von dem Laserscanner auf. Weiterhin ist eine Schnittstelle zur Ausgabe von Daten an andere Datenverarbeitungseinrichtungen in dem Fahrzeug 10 vorgesehen, die jedoch ebenfalls in den Figuren nicht gezeigt sind.

Zur Erkennung und Verfolgung von Objekten wird ein Objekterkennungsund -verfolgungsverfahren nach einer bevorzugten Ausführungsform der Erfindung in der Datenverarbeitungseinrichtung 45 ausgeführt, in der dazu ein entsprechendes Programm nach einer bevorzugten Ausführungsform der Erfindung gespeichert ist und ausgeführt wird.

Bei dem hier dargestellten Verfahren ist jedem Objekt eine Objektbox zugeordnet, die die Form und Größe eines durch das Objekt dargestellten Gegenstands darstellen soll. Die Lage der Objektboxen und damit der Objekte wird jeweils durch den Schwerpunkt der Objektbox dargestellt.

Weiterhin sind in diesem Beispiel vier Objektklassen vorgesehen, die jeweils Personen, Zweirädern, Personenkraftwagen und Lastkraftwagen entsprechen. Jedem Objekt einer Objektklasse ist als Eigenschaft eine Objektbox zugeordnet, die objektklassenspezifisch in diesem Fall die Form eines Rechtecks aufweist, dessen Länge und Breite in einem objektklassenspezifischen Wertebereich liegt.

Objekte der Objektklasse Person entsprechen dabei Gegenstandspunkten, die z. B. in einem Rechteck mit einer Länge und einer Breite jeweils zwischen 0,1 m und 1 m liegen. Objekte der Objektklasse Zweirad stellen Gegenstände dar, die in grober Näherung z. B. durch ein Rechteck darstellbar sind, dessen Länge in einem Bereich zwischen 1,5 m und 2,5 m und dessen Breite in einem Bereich zwischen 0,5 m und 1 m liegt. Entsprechendes gilt für Objekte der Objektklasse Personenkraftwagen, wobei hier jedoch z. B. die Länge in einem Bereich zwischen 3 m und 5,5 m und die Breite in einem Bereich zwischen 1,5 m und 2,5 m liegen kann. Objekte der Objektklasse Lastkraftwagen schließlich stellen Gegenstände dar, die in grober Näherung z. B. durch ein Rechteck darstellbar sind, dessen Länge in einem Bereich zwischen 6 m und 20 m und dessen Breite in einem Bereich zwischen 2 m und 3 m liegen. Für Objekte dieser Klassen ist als dynamische Eigenschaft weiterhin jeweils eine maximale Geschwindigkeit vorgesehen, die z. B. bei Personen bei 10 km/h, bei Zweirädern und Personenkraftwagen bei 250 km/h und bei Lastkraftwagen bei 120 km/h liegt.

Zur Objekterkennung und -verfolgung wird ein Kalman-Filter verwendet, wobei als Zustandsvariablen in diesem Ausführungsbeispiel die Schwerpunktskoordinaten der Objektbox eines Objekts und dessen Geschwindigkeit verwendet werden. Die Schwerpunktskoordinaten werden gleichzeitig auch als Meßgrößen bei der Kalman-Filterung verwendet.

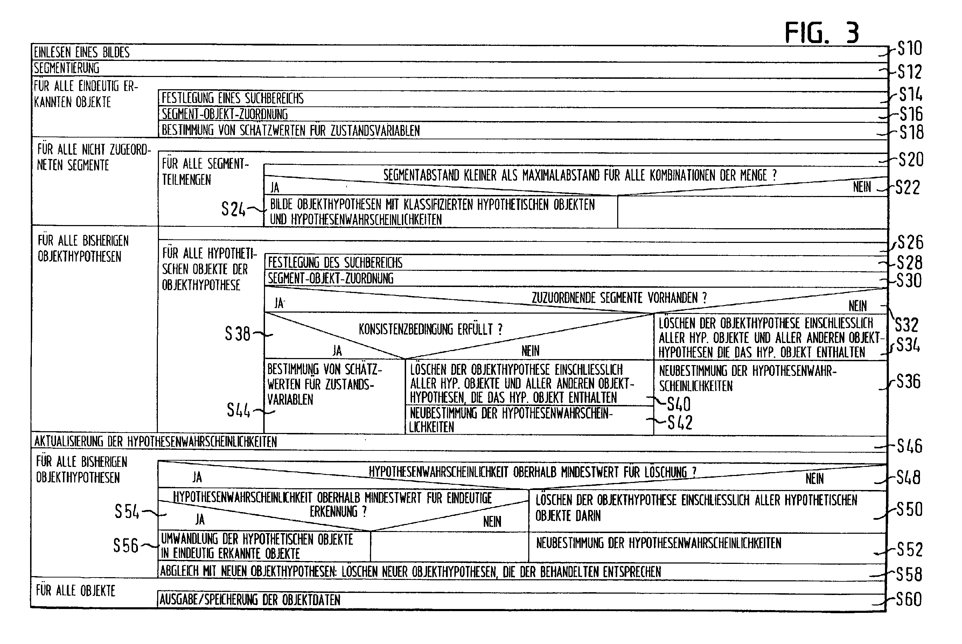

Ein beispielhafter Ablauf des Verfahrens ist schematisch in dem Diagramm in Fig. 3 gezeigt.

In Schritt S10 wird zunächst ein von dem Laserscanner 12 erfaßtes Bild eingelesen.

In Schritt S12 werden dann Bildpunkte, die in dem Bild enthalten sind, zu Segmenten zusammengefaßt. Dabei gehört ein Bildpunkt zu einem Segment, wenn er zu mindestens einem anderen Bildpunkt des Segments einen euklidischen Abstand hat, der kleiner ist als ein vorgegebener Maximalabstand, im Beispiel etwa 50 cm. In Fig. 1 ergeben sich dadurch aus den Bildpunkten 22 bis 44 Segmente 46 bis 68, die in der Fig. 1 durch die mit einer durchgezogenen Linie miteinander verbundenen Bildpunkte dargestellt sind.

Bei dem erfindungsgemäßen Verfahren sind zwei Typen von Objekten vorgesehen, nämlich eindeutig erkannte Objekte, die sicher einem Gegenstand in dem Sichtbereich 14 des Laserscanners 12 zugeordnet werden können, sowie hypothetische Objekte, für die nur eine Vermutung besteht, daß sie einen bestimmten Gegenstand in dem erfaßten Bild darstellen.

In den Schritten S14 bis S18 wird für jedes eindeutig erkannte Objekt eine Objekterkennung und -verfolgung durchgeführt. Diese folgenden Schritte werden ohne Bezugnahme auf die Fig. 1 beschrieben, da in dieser davon ausgegangen wird, daß noch keine eindeutig erkannten Objekte vorliegen.

In Schritt S14 erfolgt zunächst aufgrund prädizierter Werte für die Schwerpunktskoordinaten der Objekte beziehungsweise Objektboxen und entsprechender prädizierter Werte für die Kovarianzmatrizen der Meßgrößen eine Festlegung eines Suchbereichs, in dem nach den Objekten zuzuordnenden Segmenten gesucht wird.

In Schritt S16 erfolgt dann die Segment-Objekt-Zuordnung, bei der zur Erkennung eines gegebenen Objekts die entsprechende Objektbox in dem Suchbereich so durch Translationen und gegebenenfalls Rotation um den Schwerpunkt positioniert wird, daß in dem Suchbereich liegende Segmente in der Objektbox liegen.

Aus den Koordinaten des Schwerpunktes der Objektboxen werden dann in Schritt S18 zunächst Werte für die Meßgrößen, d. h. die Position der Objektbox und damit des Objekts, und hieraus Schätzwerte für die Zustandsvariablen, d. h. ebenfalls die Position des Objekts, bestimmt.

Werden keine Segmente für ein eindeutig erkanntes Objekt gefunden, wird für dieses als Schätzwert der Zustandsvariablen der prädizierte Wert der Zustandsvariablen verwendet. Nicht wiedergefundene Objekte werden verworfen, wenn die Unsicherheit der Prädiktion einen vorgegebenen Schwellwert überschreitet, die allein durch Prädiktion erhaltene Objektposition unplausibel ist, beispielsweise eine Überdeckung mit einem anderen eindeutig erkannten Objekt auftritt, oder das Objekt sichtbar sein müßte, aber nicht ist.

Zugeordnete Segmente werden hierbei markiert, da sie für die folgenden Schritten als nicht mehr verfügbar angesehen werden.

In den folgenden Schritten S20 bis S24 werden aus nicht zugeordneten Segmenten Objekthypothesen für neue Objekte erstellt. Die nicht zugeordneten Segmente stellen daher in diesen Beispielen die für die Objekthypothesenbildung verfügbaren Segmente im Sinne dieser Anmeldung dar.

Zur Illustration dieser Schritte wird die in Fig. 1 gezeigte Szene verwendet. Danach bilden die Segmente 46 bis 68 die Menge der verfügbaren Segmente.

Die Schritte S22 und gegebenenfalls S24 werden für alle Segmentteilmengen der Menge der verfügbaren Segmente, die jeweils in Schritt S20 gebildet werden, ausgeführt.

In Schritt S22 wird für alle Paare von Segmenten in einer Segmentteilmenge geprüft, ob jedes Segment wenigstens zu einem anderen Segment einen Abstand aufweist, der kleiner als ein vorgegebener Maximalabstand ist. Dazu wird für jedes Segment der geometrische Schwerpunkt der Koordinaten der das Segment bildenden Bildpunkte bestimmt und zur Berechnung des Abstands verwendet. Der Maximalabstand wird hier als die maximale Ausdehnung einer Objektbox bzw. eines Gegenstandes, d. h. der maximalen Länge für Objekte beziehungsweise Gegenstände der Objektklasse Lastkraftwagen, 20 m, gewählt.

Gibt es ein Segment, das zu allen anderen Segment der Segmentteilmenge einen größeren Abstand als den Maximalabstand aufweist, wird keine Objekthypothese für diese Segmentteilmenge gebildet, in Schritt S20 die nächste Segmentteilmenge gebildet und das Verfahren mit Schritt S22 fortgesetzt.

Anderenfalls werden in Schritt S24 für diese Segmentteilmenge Objekthypothesen gebildet. Dies wird im folgenden anhand der Beispiele in Fig. 1 genauer beschrieben.

Eine der Segmentteilmengen umfaßt die Segmente 66 und 68, deren Bildpunkte 42 und 44 bei der Abtastung der Motorräder 17 und 18 erfaßt wurden.

In Fig. 1 sind durch gestrichelte Linien einige der möglichen Kombinationen der Segmente zu Objekten anhand der den Objekten zugewiesenen Objektboxen gezeigt. Dabei wird als Ausdehnung der Objektbox in diesem Stadium des Verfahrens als Größe jeweils die maximale Ausdehnung der Objektbox gewählt, die in dieser Objektklasse möglich ist.

Bei der Bildung der Objekthypothesen wird jeweils überprüft, ob ein Segment oder eine Kombination von Segmenten einem Objekt hinsichtlich seiner Ausdehnung einer der vorgegebenen Objektklassen entsprechen könnte. Dazu wird um das Segment oder die Kombination von Segmenten ein kleinstes begrenzendes Rechteck gelegt, das das Segment oder die Kombination von Segmenten umschließt. Es werden dann für dieses Rechteck die Länge und die Breite festgestellt. Daraufhin wird überprüft, ob wenigstens die Länge oder die Breite innerhalb des Wertebereichs für die Länge bzw. Breite einer Objektklasse liegen. Ist dies der Fall, kann aus dem Segment bzw. aus der Kombination von Segmenten ein entsprechendes Objekts der bestimmten Objektklasse gebildet werden.

Bei einer ersten Objekthypothese wird angenommen, daß die Segmente 66 und 68 jeweils einem Objekt der Objektklasse Personen entsprechen, wobei den Objekten objektklassenspezifisch die Objektboxen 70 und 72 zugeordnet sind.

Bei einer zweiten Objekthypothese wird angenommen, daß die Segmente 66 und 68 zwei von hinten erfaßten Zweirädern entsprechen, denen die Objektboxen 74 und 76 zugeordnet sind.

Bei einer dritten Objekthypothese wird angenommen, daß die Segmente 66 und 68 zusammen einem Objekt der Objektklasse Personenkraftwagen entsprechen, dem eine Objektbox 78 zugeordnet ist.

Bei einer vierten und fünften Objekthypothese wird angenommen, daß die Segmente 66 und 68 einem Objekt der Objektklasse Zweirad mit der Objektbox 74 und einem Objekt der Objektklasse Person mit der Objektbox 72 bzw. einem Objekt der Objektklasse Person mit der Objektbox 70 und einem Objekt der Objektklasse Zweirad mit der Objektbox 76 entsprechen.

Eine sechste Objekthypothese ist dadurch gegeben, daß die Segmente 66 und 68 einem Objekt der Objektklasse Zweirad entsprechen, das quer zur Fahrtrichtung des Fahrzeugs 10 bzw. dessen Längsachse orientiert ist.

Der Übersichtlichkeit halber ist für dieses Objekt keine Objektbox in Fig. 1 gezeigt.

Da keine Anhaltspunkte dafür vorliegen, daß eine dieser Objekthypothesen bevorzugt sein könnte, wird davon ausgegangen, daß alle Objekthypothesen die gleiche Hypothesenwahrscheinlichkeit aufweisen, nämlich 1/6.

Für die Segmente im Bereich des Lastkraftwagens 16 werden hier der Einfachheit halber nur zwei der möglichen Objekthypothesen für die Segmentteilmenge, die die Segmente 46 bis 64 enthält, beschrieben.

Bei einer ersten Objekthypothese wird davon ausgegangen, daß jedes der Segmente eine Person darstellt, so daß jedem Segment ein Objekt der Klasse Person mit jeweils einer der Objektboxen 80 bis 98 zugeordnet wird.

Bei einer zweiten Objekthypothese für diese Segmentteilmenge wird davon ausgegangen, daß die Segmente durch Erfassung eines Lastkraftwagens erhalten wurden, so daß allen Segmenten der Segmentteilmenge gemeinsam ein Objekt der Objektklasse Lastkraftwagen zugeordnet wird, das als Eigenschaft die Objektbox 100 aufweist.

Da in diesem Stadium keine bisherigen Objekthypothesen existieren, werden im Fall der Fig. 1 in Schritt S60 entsprechende Daten gespeichert und ausgegeben. Es wird dann in Schritt S10 ein neues Bild eingelesen.

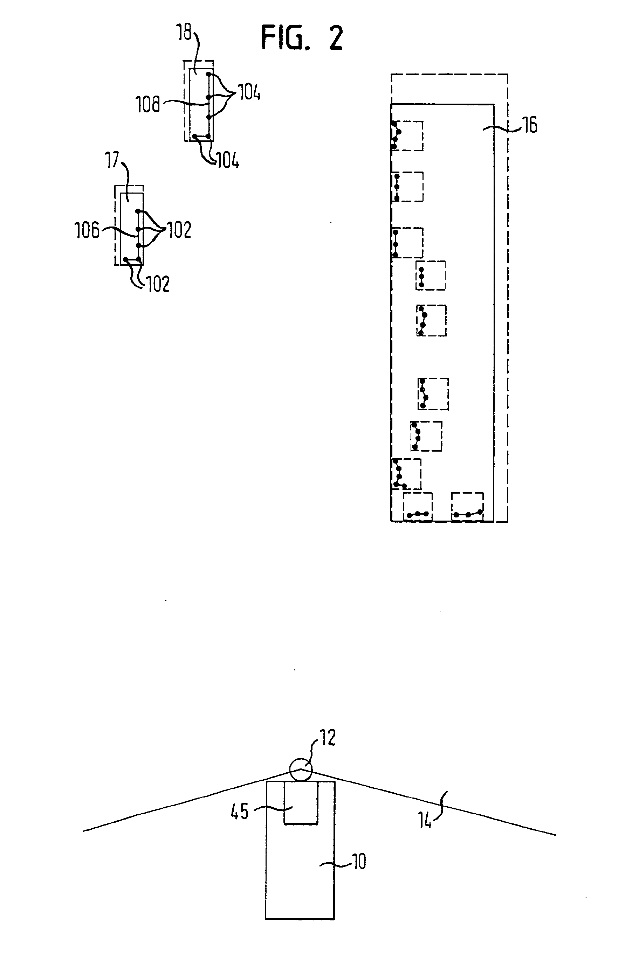

Zur weiteren Beschreibung des Verfahrens wird nun davon ausgegangen, daß als nächstes das in Fig. 2 gezeigte Bild eingelesen wurde und die Schritte S12 bis S24 vollständig ausgeführt wurden. Die oben geschilderten Objekthypothesen bilden nun einige der bisherigen Objekthypothesen.

In den Schritten S26 bis S56 werden alle bisherigen Objekthypothesen weiter bearbeitet.

In Fig. 2 ist die Szene in Fig. 1 zu einem etwas späteren Zeitpunkt nochmals gezeigt. Da sich alle Fahrzeuge, d. h. das mit dem Laserscanner 12 versehene Fahrzeug 10, die Motorräder 17 und 18 und der Lastkraftwagen 16, absolut und relativ zueinander bewegt haben, sind nun von den Motorrädern 17 und 18 Gegenstandspunkte 102 und 104 sichtbar, die auch Gegenstandspunkte entlang der Längsseite der Motorräder 17 und 18 umfassen. Weiterhin hat sich der seitliche Abstand der Motorräder so weit vergrößert, daß die Segmente - im Rahmen der verwendeten Objektklassen - nicht mehr zu einem Personenkraftwagen oder Lastkraftwagen zusammengefaßt werden können.

Es wurde daher als neue Objekthypothese für die Segmentteilmenge mit aus den Gegenstandspunkten 102 und 104 gebildeten Segmenten 106 und 108 die Objekthypothese gebildet, daß zwei Motorräder als Gegenstände vorhanden sind.

Die neuen Hypothesen für die Segmente im Bereich des Lastkraftwagens 16 entsprechen denen, die oben beschrieben wurden.

In der durch Schritt S26 dargestellten Schleife werden, soweit zutreffend, die Schritte S28 bis S44 für alle hypothetischen Objekte einer Objekthypothese durchgeführt.

Zunächst wird in Schritt S28 - wie für ein eindeutig erkanntes Objekt - ein Suchbereich festgelegt und in Schritt S30 eine Segment-Objekt-Zuordnung durchgeführt, wobei eine doppelte Zuordnung eines Segments innerhalb einer Objekthypothese ausgeschlossen wird.

In Schritt S32 wird dann überprüft, ob für das in der Schleife aktuelle hypothetische Objekt zuzuordnende Segmente vorhanden sind.

Ist dies nicht der Fall, werden in Schritt S34 die Objekthypothese einschließlich aller ihr zugeordneten hypothetischen Objekte sowie alle anderen Objekthypothesen, die das Objekt enthalten, gelöscht. Wie in Fig. 2 ersichtlich, können nur der Objekthypothese mit zwei Motorrädern die Segmente 106 und 108 sowie bei Zuordnung nur eines der Segmente 106 oder 108 zu einem Objekt der Klasse Personenkraftwagen der Objekthypothese mit einem Personenkraftwagen zugeordnet werden. Die anderen Objekthypothesen werden dementsprechend gelöscht.

In Schritt S36 werden dann alle Hypothesenwahrscheinlichkeiten für die nach der Löschung verbliebenen Objekthypothesen neu bestimmt. Dies sind jeweils diejenigen Objekthypothesen, die aus derselben Segmentteilmenge gebildet wurden wie die gelöschte Objekthypothese.

Anderenfalls wird in Schritt S38 geprüft, ob ein Objekt eine Konsistenzbedingung verletzt. Hierbei wird insbesondere geprüft, ob die Geschwindigkeit eines Objekts oberhalb der objektklassenspezifischen Maximalgeschwindigkeit liegt.

Dies wird am Beispiel der Segmente im Bereich des Lastkraftwagens 16 illustriert. Wie in Fig. 2 gezeigt, ist grundsätzlich eine Zuordnung von Segmenten für die Objekthypothese mit Objekten der Objektklasse Personen wie auch eine Zuordnung von Segmenten für die Objekthypothese mit einem Objekt der Objektklasse Lastkraftwagen möglich. Durch Überwachung der Geschwindigkeit der entsprechenden Objekte ergibt sich, daß die Geschwindigkeit der Personen oberhalb einer für diese Objektklasse spezifischen maximalen Geschwindigkeit von 10 km/h läge, so daß schon für das erste hypothetische Objekt der Objektklasse Person in Schritt S40 die gesamte Objekthypothese einschließlich aller anderen hypothetischen Objekte der Objektklasse Person gelöscht wird.

Für die Objekthypothese, die das Objekt der Klasse Lastkraftwagen enthält, wird dagegen in Schritt S44 ein Schätzwert für die Zustandsvariablen bestimmt, indem zunächst ein Meßwert für die Lage des Schwerpunktes der entsprechenden Objektbox aus den Koordinaten der Bildpunkte der dem Objekt zugeordneten Segmente ermittelt wird und dann anhand des Meßwerts und des prädizierten Werts der Zustandsvariablen mittels des Kalman-Filters der Schätzwert der Zustandsvariablen für die Position bestimmt wird.

Weiterhin wird in diesem Schritt eine Objektgüte des betrachteten Objekts bestimmt, die sich aus dem Verhältnis der Anzahl der für das Objekt erfaßten Bildpunkte zu der maximalen Anzahl der Bildpunkte, die von dem Laserscanner 12 in dieser Lage des Objekts erfaßbar sind, ergibt.

Nach Durchführung dieser Schritte werden in Schritt S46 für alle Objekthypothesen, die durch Betrachtung derselben Segmentteilmenge gebildet wurden, die Hypothesenwahrscheinlichkeiten aktualisiert. Dazu werden für jede Objekthypothese Mittelwerte der Objektgüten der der Objekthypothese entsprechenden Objekte gebildet und die Hypothesenwahrscheinlichkeiten entsprechend dieser Mittelwerte neu bestimmt.

Danach wird in den Schritten S48 bis S56 geprüft, ob Objekthypothesen verworfen werden oder Objekte einer Objekthypothese in eindeutig erkannte Objekte umgewandelt werden.

Dazu wird in Schritt S48 geprüft, ob eine Hypothesenwahrscheinlichkeit oberhalb eines Mindestwertes, im Beispiel fünf Prozent, liegt.

Ist dies nicht der Fall, wird die entsprechende Objekthypothese einschließlich aller ihrer hypothetischen Objekte in Schritt S50 gelöscht, woraufhin in Schritt S52 die Hypothesenwahrscheinlichkeiten der verbliebenen Objekthypothesen, die aus derselben Segmentteilmenge gebildet wurden, neu normiert werden.

Andernfalls wird in Schritt S54 geprüft, ob die Hypothesenwahrscheinlichkeit einer Objekthypothese oberhalb eines Mindestwertes für als eindeutig erkannt einzustufende Objekte, im Beispiel 95 Prozent, liegt. Ist dies der Fall, wird in Schritt S56 die Objekthypothese gelöscht, wobei die entsprechenden hypothetischen Objekte in eindeutig erkannte Objekte umgewandelt werden.

Schließlich wird in Schritt S58 jeweils geprüft, ob eine der neuen Objekthypothesen mit einer der bisherigen Objekthypothesen übereinstimmt. Eine solche Übereinstimmung wird festgestellt, wenn die hypothetischen Objekte beider Objekthypothesen sowohl in ihrer Anzahl, als auch in ihrer Klasse und der Lage ihres Schwerpunktes übereinstimmen, wobei die Lagen der Schwerpunkte sich um einen vorgegebenen Mindestabstand unterscheiden können, der beispielsweise etwa der minimalen Ausdehnung eines Objekts dieser Klasse entspricht. Eine mit einer bisherigen Objekthypothese übereinstimmende neue Objekthypothese wird gelöscht, woraufhin wieder die Hypothesenwahrscheinlichkeiten der neuen Objekthypothesen, die aus derselben Segmentteilmenge hervorgegangen sind, aktualisiert werden.

In Schritt S60 werden dann für alle Objekte die Objektdaten, im Beispiel die Positionen der Schwerpunkte und die Geschwindigkeiten der Objekte, ausgegeben bzw. gespeichert.

Bei einer anderen bevorzugten Ausführungsform der Erfindung läuft das erfindungsgemäße Verfahren ganz analog zu dem oben geschilderten Verfahren ab, wobei jedoch im Unterschied zu dem oben geschilderten Verfahren bei dieser Ausführungsform Objekthypothesen gebildet werden, die genau ein hypothetisches Objekt enthalten und deren Hypothesenwahrscheinlichkeiten unabhängig voneinander bestimmt werden.

Die Bildung dieser Objekthypothesen in Schritt S24 kann dabei analog zur der Bildung der hypothetischen Objekte bei dem oben geschilderten Ausführungsbeispiel erfolgen, wobei jedoch jede Objekthypothese und damit jedes hypothetische Objekt einzeln eine aus einem Gütewert der entsprechenden Messung bestimmte Hypothesenwahrscheinlichkeit erhält, die unabhängig von den Hypothesenwahrscheinlichkeiten anderer Hypothesen ist. Der Gütewert wird unter Verwendung der Anzahl der in der entsprechenden Objektbox liegenden Bildpunkte und der in der gegebenen Lage der Objektbox maximal möglichen Anzahl von Bildpunkten bestimmt.

Die Schleife S26 wird nur einmal durchlaufen, da jede Objekthypothese nur ein hypothetisches Objekt hat. Sie, aber nicht die Schritte in ihr kann daher entfallen.

Die Schritte S28 bis S32 werden analog ausgeführt. Wird in Schritt S32 erkannt, daß kein zuzuordnendes Segment vorhanden ist, wird in dem modifizierten Schritt S34 nur die Objekthypothese gelöscht. Wegen der Unabhängigkeit der Objekthypothesen voneinander kann Schritt S36 entfallen.

Entsprechendes gilt für den Zweig mit den Schritten S40 und S42, der bei Nichterfüllung der Konsistenzbedingung in Schritt S38 durchlaufen wird. Schritt S44 bleibt unverändert.

In Schritt S46 werden nun die Hypothesenwahrscheinlichkeiten unter Verwendung der in Schritt S44 bestimmten Objektgüten unabhängig voneinander aktualisiert.

Die folgenden Schritt S46 bis S58 werden analog durchlaufen, wobei Schritt S52 wie Schritt S36 und Schritt S42 entfallen kann, da die Hypothesenwahrscheinlichkeiten unabhängig voneinander aktualisiert werden. Schritt S60 bleibt unverändert.

Das erfindungsgemäße Verfahren nach der eben beschriebenen Ausführungsform der Erfindung unterscheidet sich von dem nach der ersten Ausführungsform also dadurch, daß die Objekthypothesen nur für einzelne Objekte gebildet werden, deren Hypothesenwahrscheinlichkeiten in diesem Ausführungsbeispiel unabhängig voneinander im wesentlichen in Abhängigkeit von der Objektgüte des hypothetischen Objekts bestimmt werden.

### Bezugszeichenliste

- 10: Fahrzeug
- 12: Laserscanner
- 14: Sichtbereich
- 16: Lastkraftwagen
- 17: Motorrad
- 18: Motorrad
- 20: Strahlungsbündel
- 22 bis 44: Gegenstandspunkt
- 45: Datenverarbeitungseinrichtung
- 46 bis 68: Segment
- 70 bis 100: Objektbox
- 102: Gegenstandspunkte
- 104: Gegenstandspunkte
- 106: Segment
- 108: Segment

## Patentansprüche

1. Verfahren zur Erkennung und Verfolgung von Objekten auf der Basis von von einem Sensor, insbesondere einem Laserscanner (12), erfaßten, bevorzugt geschwindigkeits- oder tiefenaufgelösten, Bildpunkte (22 bis 44, 104) enthaltenden Bildern von Gegenständen (16, 17, 18) in einem Sichtbereich (14) des Sensors (12), bei dem die Erkennung und Verfolgung unter Verwendung von den Objekten zugeordneten Modellen für die zeitliche Entwicklung von Zustandsvariablen erfolgt, die jeweils einen zeitlich veränderlichen Zustand des Objekts beschreiben und Zustandsvariablen zur Bestimmung wenigstens einer sensorspezifischen Eigenschaft des jeweiligen Objekts umfassen,
- aus den Bildpunkten (22 bis 44, 104) des aktuellen Bildes Segmente (46 bis 68, 102) gebildet werden, die jeweils einen einzelnen Bildpunkt oder eine Menge aller Bildpunkte umfassen, von denen jeweils mindestens zwei entsprechend wenigstens einem Segmentierungskriterium als dem Segment zugehörig definiert werden, und die untereinander keine gemeinsamen Bildpunkte aufweisen,
- eine Zuordnung von Segmenten (46 bis 68, 102) eines aktuellen Bildes zu Objekten erfolgt, und
- abhängig von der Lage der Bildpunkte (22 bis 44, 104) in den Segmenten (46 bis 68, 102) und von dem Modell Schätzwerte der Zustandsvariablen zur Bestimmung der sensorspezifischen Eigenschaften der jeweiligen Objekte ermittelt werden,
**dadurch gekennzeichnet,**
**daß** aus verfügbaren Segmenten (46 bis 68, 102) hypothetische Objekte gebildet werden, denen eine Wahrscheinlichkeit für die Existenz eines dem hypothetischen Objekt entsprechenden Gegenstands (16, 17, 18) zugeordnet wird und für die in wenigstens einer folgenden Iteration des Verfahrens eine Erkennung und Verfolgung sowie eine Aktualisierung der Wahrscheinlichkeit durchgeführt wird.

2. Verfahren nach Anspruch 1,
**dadurch gekennzeichnet,**
**daß** hypothetische Objekte verworfen werden, wenn deren Wahrscheinlichkeit eine erste Mindestwahrscheinlichkeit unterschreitet.

3. Verfahren nach Anspruch 1 oder 2,
**dadurch gekennzeichnet,**
**daß** hypothetische Objekte als eindeutig erkannte Objekte behandelt werden, wenn deren Wahrscheinlichkeit eine zweite Mindestwahrscheinlichkeit überschreitet.

4. Verfahren nach Anspruch 3,
**dadurch gekennzeichnet,**
**daß** die verfügbaren Segmente nur die Segmente (46 bis 68, 102) eines Bildes sind, die keinen eindeutig erkannten Objekten zugeordnet werden können.

5. Verfahren nach einem der vorhergehenden Ansprüche,
**dadurch gekennzeichnet,**
**daß** für Segmentteilmengen in der Menge aller verfügbaren Segmente (46 bis 68, 102) jeweils mindestens eine Objekthypothese gebildet wird, die wenigstens ein hypothetisches Objekt umfaßt, und
**daß** der Objekthypothese eine Hypothesenwahrscheinlichkeit zugewiesen wird, wobei die Hypothesenwahrscheinlichkeiten bei wenigstens einem folgenden Iterationsschritt aktualisiert werden und die Summe der Hypothesenwahrscheinlichkeiten der Objekthypothesen für eine Segmentteilmenge Eins ist.

6. Verfahren nach einem der Ansprüche 1 bis 4,
**dadurch gekennzeichnet,**
**daß** für Segmentteilmengen in der Menge aller verfügbaren Segmente (46 bis 68, 102) jeweils mindestens eine Objekthypothese gebildet wird, die genau ein hypothetisches Objekt umfaßt, und
**daß** der Objekthypothese eine Hypothesenwahrscheinlichkeit zugewiesen wird, die bei wenigstens einem folgenden Iterationsschritt aktualisiert wird.

7. Verfahren nach Anspruch 5 oder 6,
**dadurch gekennzeichnet,**
**daß** für jede Segmentteilmenge in der Menge aller verfügbaren Segmente (46 bis 68, 102), die wenigstens einem vorgegebenen Hypothesenbildungskriterium entspricht, Objekthypothesen gebildet werden.

8. Verfahren nach Anspruch 7,
**dadurch gekennzeichnet,**
**daß** als Hypothesenbildungskriterium verwendet wird, daß jeweils mindestens zwei Segmente der Segmentteilmenge einen Abstand voneinander aufweisen, der einen vorgegebenen Mindestabstand unterschreitet.

9. Verfahren nach einem der Ansprüche 5 bis 8,
**dadurch gekennzeichnet,**
**daß** Objekthypothesen verworfen werden, wenn deren Hypothesenwahrscheinlichkeit eine dritte Mindestwahrscheinlichkeit unterschreitet oder eines ihrer hypothetischen Objekte verworfen wird.

10. Verfahren nach einem der Ansprüche 5 bis 9,
**dadurch gekennzeichnet,**
**daß** die hypothetischen Objekte einer Objekthypothese als eindeutig erkannte Objekte behandelt, die Objekthypothese gestrichen wird, wenn die Wahrscheinlichkeit der Objekthypothese eine vierte Mindestwahrscheinlichkeit überschreitet.

11. Verfahren nach Anspruch 5 und 11,
**dadurch gekennzeichnet,**
**daß** alle anderen Objekthypothesen, die aus derselben Segmentteilmenge wie die gestrichene Objekthypothese gebildet wurden, verworfen werden.

12. Verfahren nach einem der vorhergehenden Ansprüche,
**dadurch gekennzeichnet,**
**daß** die Wahrscheinlichkeiten und/oder Hypothesenwahrscheinlichkeiten durch Heuristiken bestimmt werden.

13. Verfahren nach einem der Ansprüche 5 bis 12,
**dadurch gekennzeichnet,**
**daß** in dem Fall, daß wenigstens ein hypothetisches Objekt einer Objekthypothese wenigstens ein vorgegebenes Konsistenzkriterium nicht erfüllt, die Objekthypothese verworfen wird.

14. Verfahren nach Anspruch 13 und Anspruch 5,
**dadurch gekennzeichnet,**
**daß** alle anderen Objekthypothesen, die ein mit dem hypothetischen Objekt, das das vorgegebenes Konsistenzkriterium nicht erfüllt, übereinstimmendes hypothetisches Objekt aufweisen, verworfen wird.

15. Verfahren nach einem der vorhergehenden Ansprüche,
**dadurch gekennzeichnet,**
**daß** zur Klassifizierung von Objekten mehrere Objektklassen vorgesehen werden, die wenigstens eine Eigenschaft von Objekten betreffen, die aus wenigstens einem der tiefenaufgelösten Bilder bestimmbar ist,
**daß** allen Objekten als Eigenschaft eine der Objektklassen zugeordnet ist, wobei die Zuordnung von Objektklassen zu hypothetischen Objekten bei deren Bildung erfolgt und die Hypothese ein Annahme über die Zuordnung einer Objektklasse umfaßt.

16. Verfahren nach einem der Ansprüche 13 bis 15,
**dadurch gekennzeichnet,**
**daß** das Konsistenzkriterium eine durch die Objektklasse erfaßte Eigenschaft betrifft.

17. Verfahren nach Anspruch 15 oder 16,
**dadurch gekennzeichnet,**
**daß** eine Objektklasse eine Häufigkeitsverteilung für eine aus einem oder mehreren Bildern bestimmbare Eigenschaft der durch Objekte der Objektklasse dargestellten Gegenstände aufweist, in einem aktuellen Iterationsschritt für ein Objekt der Objektklasse die Eigenschaft bestimmt wird, und die Hypothesenwahrscheinlichkeit einer Objekthypothese, die das Objekt enthält, in Abhängigkeit von der bestimmten Eigenschaft und von der Häufigkeitsverteilung für die Eigenschaft bestimmt wird.

18. Verfahren nach einem der vorhergehenden Ansprüche,
**dadurch gekennzeichnet,**
**daß** jedem Objekt eine Objektbox (70 bis 100) zugeordnet ist, die eine Ausdehnung des Objekts in der Bildebene darstellt, deren Form und Größe von der dem Objekt zugeordneten Objektklasse abhängt und die hinsichtlich Form und Größe dem durch das Objekt dargestellten Gegenstand entspricht, und
**daß** ein Segment (46 bis 68, 102) einem Objekt zugeordnet wird, wenn die Objektbox (70 bis 100) durch entsprechende Positionierung das Segment (46 bis 68, 102) enthält.

19. Verfahren nach Anspruch 18,
**dadurch gekennzeichnet,**
**daß** in Abhängigkeit von der Lage der Bildpunkte (22 bis 44, 104) in der Objektbox (70 bis 100) und/oder der Anzahl der Bildpunkte (22 bis 44, 104) in der Objektbox (70 bis 100) eine Objektgüte bestimmt wird, und
**daß** die Hypothesenwahrscheinlichkeit einer Hypothese oder Objekthypothese in Abhängigkeit von der Objektgüte des oder der hypothetischen Objekte bestimmt wird.

20. Verfahren nach Anspruch 19,
**dadurch gekennzeichnet,**
**daß** zur Bestimmung der Objektgüte die Anzahl der Bildpunkte in der Objektbox (70 bis 100) verwendet wird,
**daß** vor der Bestimmung der Objektgüte überprüft wird, ob ein Teil des durch das hypothetische Objekt dargestellten Gegenstands (16, 17, 18) durch einen anderen, zwischen dem Sensor (12) und dem Gegenstand (16, 17, 18) liegenden Gegenstand verdeckt wird, und daß bei der Bestimmung der Objektgüte die Anzahl der durch die Verdeckung ausgeblendeten Bildpunkte in der Objektbox (70 bis 100) berücksichtigt wird.

21. Verfahren nach einem der vorhergehenden Ansprüche,
**dadurch gekennzeichnet,**
**daß** eine Objektgüte in Abhängigkeit von den minimalen Abständen zwischen in der Objektbox (70 bis 100) liegenden Bildpunkten (22 bis 44, 104) und dem Rand der Objektbox (70 bis 100) und von der Anzahl der in der Objektbox (70 bis 100) liegenden Bildpunkte (22 bis 44, 104) bestimmt wird, und
**daß** die Hypothesenwahrscheinlichkeit einer Hypothese oder Objekthypothese in Abhängigkeit von der Objektgüte des oder der hypothetischen Objekte bestimmt wird.

22. Computerprogramm mit Programmcode-Mitteln, um das Verfahren nach einem der Ansprüche 1 bis 21 durchzuführen, wenn das Programm auf einem Computer ausgeführt wird.

23. Computerprogrammprodukt mit Programmcode-Mitteln, die auf einem computerlesbaren Datenträger gespeichert sind, um das Verfahren nach einem der Ansprüche 1 bis 21 durchzuführen, wenn das Computerprogrammprodukt auf einem Computer ausgeführt wird.

24. Vorrichtung zur Erkennung und Verfolgung von Objekten mit mindestens einem zur Erfassung bevorzugt geschwindigkeits- oder tiefenaufgelöster Bilder eines Überwachungsbereichs (14) ausgebildeten Sensor insbesondere einem Laserscanner (12), und mit einer Datenverarbeitungseinrichtung (45), die zur Durchführung des Verfahrens nach einem der Ansprüche 1 bis 21 ausgebildet ist.
